# EUROPÄISCHE PATENTSCHRIFT

(11) **EP 3 431 319 B1**
(45) Veröffentlichungstag und Bekanntmachung des Hinweises auf die Patenterteilung: **10.01.2024**
(21) Anmeldenummer: 18179074.2
(22) Anmeldetag: 21.06.2018
(51) Int. Cl.: B60K 28/14, B60R 21/00, B60T 7/22, B60T 8/17, B60T 8/00

(54) **VORRICHTUNG ZUR REDUZIERUNG VON UNFALLFOLGEN BEI FAHRZEUGEN**
DEVICE FOR REDUCING THE CONSEQUENCES OF AN ACCIDENT IN VEHICLES
DISPOSITIF DE RÉDUCTION DES SUITES D'UNE COLLISION POUR VÉHICULES

(30) Priorität: 17.07.2017 DE 102017116026
(43) Veröffentlichungstag der Anmeldung: 23.01.2019
(73) Patentinhaber: MAN Truck & Bus SE, 80995 München (DE)
(72) Erfinder: Eskisagir, Cenker, 80937 München (DE)
(74) Vertreter: v. Bezold & Partner Patentanwälte - PartG mbB

(56) Entgegenhaltungen:
- EP-A1- 0 857 603
- DE-A1- 10 220 566
- DE-A1-102008 007 663
- US-A- 4 308 438

## Beschreibung

Die Erfindung betrifft eine Vorrichtung zur Reduzierung von Unfallfolgen bei Fahrzeugen.

Moderne Kraftfahrzeuge sind zum Schutz der Insassen vor Verletzung oder Tod bei Crashfällen mit einem Insassen-Schutzsystem, das meist aus mehreren Insassen-Schutzeinrichtungen, beispielsweise Frontairbag, Seitenairbag, Kopfairbag, Gurtstraffer, und einem prozessorgestützten Auslösesystem zur Aktivierung der Schutzeinrichtungen im Crashfall besteht, ausgestattet.

Ferner sind Notbremssysteme in Fahrzeugen allgemein bekannt, wobei generell zwischen Unfallvermeidungssystemen und Unfallfolgenverminderungssystemen unterschieden wird. Unfallvermeidungssysteme erkennen Gefahrensituationen rechtzeitig und verhindern unter Idealbedingungen den Auffahrunfall. Unfallfolgenverminderungssysteme erkennen eine Gefahrensituation ebenfalls, leiten eine Notbremsung aber erst später ein. Auf diese Weise wird lediglich ein Teil der Aufprallenergie dem Fahrzeug entzogen.

So sind Systeme bekannt, die durch gezieltes Beschleunigen bzw. Verzögern und/oder durch Ausweichmanöver eine Kollision des Fahrzeugs mit einem Hindernis verhindern sollen. Derartige, kurz als CAS (Collision Avoidance Systems) bezeichnete Systeme sollen das Fahrzeug aus mittels Sensoren erkannten Kollisionssituationen dadurch herausführen, dass durch eine vom Fahrer entkoppelte Lenkung und damit unabhängig vom Fahrer auszuführende Lenkbewegungen sowie ebenfalls fahrerunabhängig gesteuerte Beschleunigungen bzw. Verzögerungen des Fahrzeugs eine Kollision vermieden wird. Ein solches System ist bekannt aus dem Dokument EP 0 582 236 A1.

Notbremssysteme sind im Allgemeinen als Fahrerassistenzsysteme vorgesehen, um bevorstehende Auffahrunfälle bzw. Frontalcrashs detektieren zu können. Hierdurch ist es möglich, einen Frontalaufprall noch zu vermeiden oder bei einem bevorstehenden Frontalaufprall eine geringe Auffahrgeschwindigkeit zu erreichen, um die Schäden gering zu halten. Die Offenlegungsschrift DE 10 2007 042 481 A1 offenbart ein Fahrerassistenzsystem eines Kraftfahrzeugs, das dazu dient, durch eine autonome Teilbremsung eines Kraftwagens, beispielsweise eines Nutzfahrzeugs, kurz vor der Kollision die Unfallschwere zu vermindern oder durch autonome Vollbremsung bei nicht mehr möglichem Ausweichen vor einem Hindernis die Unfallschwere zu vermindern oder einen Unfall vollständig zu vermeiden. Dazu wird als Fahrdatensensor beispielsweise ein Abstandssensor vorgesehen, der einen Abstand zu einem vorausfahrenden Fahrzeug ermittelt. Die Offenlegungsschrift EP 2 407 358 A1 offenbart beispielsweise ein Verfahren zur Ausführung eines Notbremsvorgangs eines Fahrzeugs, insbesondere Nutzfahrzeugs, zur Unfallvermeidung und/oder Unfallfolgenverminderung, wobei bei Erfassen und/oder Vorliegen zumindest einer vorgegebenen Warnbedingung ein Notbremsvorgang ausgelöst wird, derart, dass bei Auslösung des Notbremsvorgangs eine Fahrerwarnung ausgegeben wird und gleichzeitig oder zeitversetzt dazu eine definierte Notbremsverzögerung des Fahrzeugs auf Basis einer zeitlich vor und/oder während des Notbremsvorgangs bestimmten und auf den Notbremsvorgang bezogenen Einflussgröße vorgegeben und/oder gesteuert wird. Das Dokument EP 0 857 603 A1 beschreibt ein Batterietrennungssystem für ein Kraftfahrzeug, das von Hand reversibel ist und Schutz vor zu starken Strömen bietet. Das Batterietrennungssystem trennt die Batterie bei Vorliegen eines ungünstigen Zustands von elektrischen Lasten über einen Schalter. Das Trennungssystem ist derart ausgebildet, dass, nachdem der Schalter geöffnet worden ist, ein Handbetätigungselement betätigt werden kann, um den Schalter wieder zu schließen.

Die DE 102 20 566 A1 betrifft ein Verfahren zur automatischen Notbremsung eines mit einem automatischen Notbremssystem ausgerüsteten Fahrzeugs, wobei eine automatische Notbremsung ausgelöst wird, wenn eine Kollision des Fahrzeugs mit einem Hindernis entweder fahrphysikalisch oder seitens des Fahrers unvermeidbar ist.

Die DE 10 2008 007663 A1 beschreibt ein Verfahren zum Immobilisieren eines Kraftfahrzeugs in Abhängigkeit von einer Kollisionserkennung.

Die aus dem Stand der Technik bekannten Ansätze zur Verminderung von Unfallfolgen bei Fahrzeugen sind jedoch nicht oder nur begrenzt wirksam in Situationen, wo ein Fahrer bewusst einen Crash oder Unfall verursacht, mit der Absicht, unbeteiligte Passanten zu verletzen oder sogar zu töten. Derartige terroristische Amokfahrten, bei denen ein Fahrzeug, insbesondere ein Nutzfahrzeug, als Waffe eingesetzt wird, um damit möglichst viele Passanten zu überfahren, sind leider in der jüngeren Vergangenheit des Öfteren aufgetreten. Selbst wenn das Fahrzeug mit einem Notbremssystem ausgestattet wäre, verhindern derartige Systeme üblicherweise nicht, dass das Fahrzeug unmittelbar nach einem erzwungenen Stillstand erneut wieder beschleunigt und zur Weiterfahrt verwendet werden kann.

Es ist daher eine Aufgabe der Erfindung, eine verbesserte Vorrichtung zur Reduzierung von Unfallfolgen bei Fahrzeugen bereitzustellen, mit der Nachteile herkömmlicher Techniken vermieden werden können. Die Aufgabe der Erfindung ist es insbesondere, verbesserte Vorrichtung zur Reduzierung von Unfallfolgen bei Fahrzeugen bereitzustellen, die das Durchführen einer terroristischen Amokfahrt mit dem Fahrzeug verhindert oder zumindest erschweren soll.

Diese Aufgaben werden durch eine Vorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird eine Vorrichtung zur Reduzierung von Unfallfolgen bei Fahrzeugen bereitgestellt. Die Vorrichtung umfasst eine Unfall-Sensoreinrichtung. Bei der Unfall-Sensoreinrichtung handelt es sich um eine Sensoreinrichtung, die Signale erzeugt, aus denen ableitbar ist, dass das Fahrzeug einem Aufprall (Crash) und/oder einem Unfall ausgesetzt ist. Die Unfall-Sensoreinrichtung kann ausgebildet sein, ein Aufprall- und/oder Unfallereignis im Frontbereich des Fahrzeugs zu detektieren. Derartige Unfall-Sensoreinrichtungen sind aus dem Stand der Technik an sich bekannt, z. B. in Form von Luftkissen, (Airbag)-Sensoren oder allgemein Crash-Sensoren, auch als Aufprall- oder Unfall-Sensoren bezeichnet. Beispielsweise kann die Unfall-Sensoreinrichtung mehrere, im Frontbereich des Fahrzeugs angeordnete Crash-Sensoren umfassen. Bekannte Crash- oder Unfall-Sensoren können beispielsweise als sogenannte Beschleunigungssensoren aufgebaut sein, die im Falle eines Unfalls oder Aufprallereignisses die Beschleunigung bzw. Verzögerung, die beim Aufprall auftritt, erfassen. Übersteigt die Beschleunigung bzw. Verzögerung einen kritischen Wert, so kann auf eine Unfall- oder Crashsituation geschlossen werden.

Die Vorrichtung zur Reduzierung von Unfallfolgen bei Fahrzeugen umfasst ferner eine manuell betätigbare Freigabeeinrichtung, die an einer Stelle des Fahrzeugs angeordnet ist, die vom Fahrersitzplatz aus, ohne auszusteigen, nicht erreichbar ist. Dies bedeutet, dass der Fahrer, falls er die Freigabeeinrichtung betätigen möchte, erst aussteigen muss, um die Stelle, an der die Freigabeeinrichtung angeordnet ist, zu erreichen.

Die Vorrichtung zur Reduzierung von Unfallfolgen bei Fahrzeugen umfasst ferner eine Steuereinrichtung, die ausgebildet ist, von der Unfall-Sensoreinrichtung erzeugte Signale auszuwerten und zu bestimmen, ob eine Crash- und/oder Unfallsituation vorliegt. Die Steuereinrichtung ist ferner ausgebildet, bei Vorliegen einer Crash- und/oder Unfallsituation mindestens eine Funktion, die für die Weiterfahrt des Kraftfahrzeugs erforderlich ist, zu blockieren.

Die Vorrichtung zur Reduzierung von Unfallfolgen ist ferner ausgebildet, die Blockierung der mindestens einen Funktion, die für die Weiterfahrt des Kraftfahrzeugs erforderlich ist, erst nach einer manuellen Betätigung der Freigabeeinrichtung aufzuheben. Dies kann beispielsweise dadurch realisiert werden, dass die Steuereinrichtung ausgebildet ist, zu erfassen, ob die Freigabeeinrichtung manuell betätigt wurde, und die Weiterfahrt des Fahrzeugs, insbesondere nach einem Stillstand des Fahrzeugs, so lange zu blockieren, d. h. zu verhindern, bis die Freigabeeinrichtung manuell betätigt wurde. Alternativ kann die Freigabeeinrichtung selbst ausgeführt sein, dass eine manuelle Betätigung unmittelbar die Blockierung der mindestens einen Funktion, die für die Weiterfahrt des Kraftfahrzeugs erforderlich ist, aufhebt.

Mit anderen Worten stellt die Vorrichtung einen Sicherheitsmechanismus bzw. Verzögerungsmechanismus bereit, der sicherstellt, dass das Fahrzeug nach einem Unfall bzw. Crash (Aufprall) zum Stillstand kommt und es danach nicht möglich ist, sofort weiterzufahren. Stattdessen wird durch die Notwendigkeit zur Freigabe der Weiterfahrt eine nur durch Aussteigen betätigbare Freigabeeinrichtung betätigen zu müssen, ein Verzögerungsmechanismus bereitgestellt, der den Fahrer oder Beifahrer, wenn er nach einem Crash- oder Unfallereignis weiterfahren möchte, zwingt, auszusteigen, um die Freigabeeinrichtung zu betätigen.

Hieraus ergibt sich eine Reihe von Vorteilen:
In dem Fall, dass ein Fahrer mit dem Fahrzeug absichtlich zur Durchführung eines terroristischen Aktes eine Crash-Situation erzeugt, wird für Passanten durch den erfindungsgemäßen Verzögerungsmechanismus der Vorrichtung wertvolle Zeit erzeugt, in der sie sich in Sicherheit bringen können. Für den Fall, dass der terroristische Fahrer nicht weiß, dass eine Freigabeeinrichtung existiert oder wo diese angeordnet ist, kann eine Fortsetzung des terroristischen Akts mit dem Fahrzeug verhindert werden. Für den Fall, dass der terroristische Fahrer weiß, dass er eine Freigabeeinrichtung betätigen muss und wo diese ist, wird der Fahrer zumindest gezwungen, das Fahrzeug zu verlassen, wenn er die Freigabeeinrichtung betätigen möchte, um die Weiterfahrt zu ermöglichen. Hierdurch wird wertvolle Zeit für Passanten geschaffen und ferner der Zugriff von Sicherheitskräften auf den terroristischen Fahrer erleichtert.

Die erfindungsgemäße Vorrichtung bietet jedoch auch Vorzüge in anderen Situationen. Auch bei einem Unfall (nicht-beabsichtigter Crash) stellt das System sicher, dass keine sofortige Weiterfahrt des Fahrzeugs möglich ist, und kann so weitere Schäden verhindern. Falls beispielsweise ein Fahrer durch Krankheit, Herzinfarkt, Bewusstlosigkeit oder Einschlafen auf ein vorausliegendes Fahrzeug oder etwas anderes auffährt und sein Fuß immer noch auf dem Gaspedal ist, wird eine Weiterfahrt dennoch durch die Vorrichtung automatisch blockiert, um weitere Schäden zu verhindern.

Auch wird eine Unfallflucht durch den Fahrer erschwert, da eine mögliche Unfallflucht über den Verzögerungsmechanismus zeitlich verzögert wird.

Erfindungsgemäß ist die Steuereinrichtung ausgebildet, zum Blockieren der mindestens einen Funktion, die für die Weiterfahrt des Kraftfahrzeugs erforderlich ist, die Antriebsräder mittels eines Bremssystems zu blockieren, nach Einleiten eines Notbremsvorgang des Fahrzeugs bis zum Stillstand. Hierzu kann die Steuereinrichtung ausgebildet sein, ein Bremssystem des Fahrzeugs, z. B. ein elektronisches Bremssystem, zu aktivieren, um die Antriebsräder zu blockieren.

Zusätzlich kann die Steuereinrichtung ausgebildet sein, zum Blockieren der mindestens einen Funktion, die für die Weiterfahrt des Kraftfahrzeugs erforderlich ist, die Kraftstoffzufuhr und/oder die elektrische Energieversorgung des Kraftfahrzeugs zu unterbrechen. Hierzu kann die Steuereinrichtung zur Unterbrechung der Kraftstoffzufuhr ausgebildet sein, die Kraftstoffzufuhrsteuerung elektronisch zu unterbrechen und/oder ein elektronisch ansteuerbares Steuerventil in der Kraftstoffzufuhrleitung zu schließen.

Die Steuereinrichtung kann beispielsweise als Hauptsteuergerät (engl. Main ECU) des Fahrzeugs oder als separat vorgesehenes Steuergerät vorgesehen sein.

Die Steuereinrichtung ist ausgebildet, bei Vorliegen einer Crash- und/oder Unfallsituation einen Notbremsvorgang des Fahrzeugs bis zum Stillstand einzuleiten. Dies kann analog zu einem aus dem Stand der Technik bekannten Notbremssystem erfolgen.

Gemäß einer weiteren bevorzugten Ausführungsform ist die Freigabeeinrichtung an einem hinteren und/oder seitlichen Bereich des Fahrzeugs angeordnet. Dies bietet einerseits den Vorzug, dass der Fahrer möglichst lange braucht, bis er die Freigabeeinrichtung nach einem Crash-Ereignis erreicht. Andererseits ist die Freigabeeinrichtung dadurch vor mechanischen Beschädigungen bei einem im Frontbereich auftretenden Crash-Ereignis möglichst gut geschützt.

Gemäß einer weiteren vorteilhaften Ausführungsform kann die Freigabeeinrichtung ausgeführt sein, dass diese nur unter Verwendung des Zündschlüssels manuell betätigbar ist. Beispielweise kann vorgesehen sein, dass zur Betätigung der Freigabeeinrichtung der Zündschlüssel in eine entsprechende Aufnahme der Freigabeeinrichtung gesteckt werden muss, damit diese betätigt werden kann. Hierdurch wird die sofortige Weiterfahrt nach einem Crash- oder Unfallereignis weiter erschwert.

Das Fahrzeug kann ein Kraftfahrzeug sein, insbesondere ein Personenkraftwagen oder ein Nutzfahrzeug. Das Nutzfahrzeug kann ein Lastkraftwagen oder ein Omnibus sein.

Gemäß einem weiteren Aspekt kann das Fahrzeug ein Personenkraftwagen sein, und die Freigabeeinrichtung kann im Kofferraum des Fahrzeugs angeordnet sein. Im Kofferraum kann die Freigabeeinrichtung geschützt untergebracht werden. Ferner wird der Fahrer im Crash-Fall gezwungen, um das Fahrzeug herumzulaufen und den Kofferraum zu öffnen, um die Freigabeeinrichtung zu betätigen, wodurch im Terrorfall wertvolle Zeit gewonnen werden kann. Gemäß einem weiteren Aspekt kann das Fahrzeug ein Lastkraftwagen mit Fahrerhaus sein, und die Freigabeeinrichtung kann außerhalb des Fahrerhauses angeordnet sein. Gemäß einem weiteren Aspekt kann das Fahrzeug ein Omnibus sein, und die Freigabeeinrichtung kann im Heckbereich des Omnibusses angeordnet sein.

Gemäß einer weiteren vorteilhaften Ausführungsform kann die Freigabeeinrichtung von der Steuereinrichtung elektronisch bzw. elektronisch ansteuerbar sein, so dass die Freigabeeinrichtung sowohl manuell betätigbar als auch elektronisch ansteuerbar ist. Gemäß diesem Aspekt kann die Steuereinrichtung ausgebildet sein, zum Blockieren der mindestens einen Funktion, die für die Weiterfahrt des Kraftfahrzeugs erforderlich ist, die Freigabeeinrichtung anzusteuern, insbesondere derart, dass diese in einen Zustand geschaltet wird, in dem die Freigabeeinrichtung die entsprechende Funktion blockiert.

Gemäß diesem Aspekt kann die Freigabeeinrichtung ausgebildet sein, nach Ansteuerung durch die Steuereinrichtung die Antriebsräder mittels eines Bremssystems zu blockieren und/oder die Kraftstoffzufuhr und/oder die Energieversorgung des Kraftfahrzeugs zu unterbrechen. Gemäß diesem Aspekt kann die Freigabeeinrichtung ferner ausgebildet sein, bei manueller Betätigung die Blockierung der Antriebsräder, die Unterbrechung der Kraftstoffversorgung und/oder der Energieversorgung aufzuheben.

Gemäß einem weiteren Aspekt kann die Steuereinrichtung ausgebildet sein, bei Vorliegen einer Crash- und/oder Unfallsituation eine Notbeleuchtung, insbesondere den Warnblinker, zu aktivieren und/oder einen automatischen Notruf an eine Notrufzentrale abzusetzen.

Gemäß einem weiteren Aspekt kann die Steuereinrichtung ausgebildet sein, von der Unfall-Sensoreinrichtung erzeugte Signale mit Hilfe eines zugeordneten Crash-Algorithmus auszuwerten und zu bestimmen, ob ein vorbestimmter Crash-Schwellenwert oder Aufprallkriterium, der oder das ein Maß für die Intensität eines Crashs oder Unfalls angibt, überschritten ist, und zu bestimmen, dass eine Crash- und/oder Unfallsituation vorliegt, falls der Crash-Schwellenwert oder das Aufprallkriterium überschritten wurde. Gemäß dieser Variante kann zwischen einem leichten Aufprallereignis, z. B. Anstoßen beim Parken oder Rangieren, und einem ernsthaften Aufprallereignis unterschieden werden, so dass nur Letzteres als eine Crash- und/oder Unfallsituation erkannt wird, bei der die Weiterfahrt temporär blockiert wird. Der Crash-Schwellenwert kann ein vorbestimmter Beschleunigungswert sein, der von einem Crash-Sensor gemessen wird.

Die Erfindung betrifft ferner ein Verfahren zur Reduzierung von Unfallfolgen bei Fahrzeugen. Zur Vermeidung von Wiederholungen sollen vorrichtungsgemäß offenbarte Merkmale auch als verfahrensgemäß offenbart gelten und beanspruchbar sein.

Die Erfindung betrifft ferner ein Kraftfahrzeug, insbesondere ein Nutzfahrzeug, umfassend eine Vorrichtung zur Reduzierung von Unfallfolgen bei Fahrzeugen, wie in diesem Dokument beschrieben.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematisches Blockdiagram einer Vorrichtung gemäß einer Ausführungsform der Erfindung;
- Figur 2: ein Ablaufdiagramm zur Illustration der Funktionsweise der Vorrichtung gemäß einer Ausführungsform der Erfindung; und
- Figur 3: eine Frontansicht eines LKWs, an dem Crash-Sensoren als Teil der Unfall-Sensoreinrichtung angebracht sind.

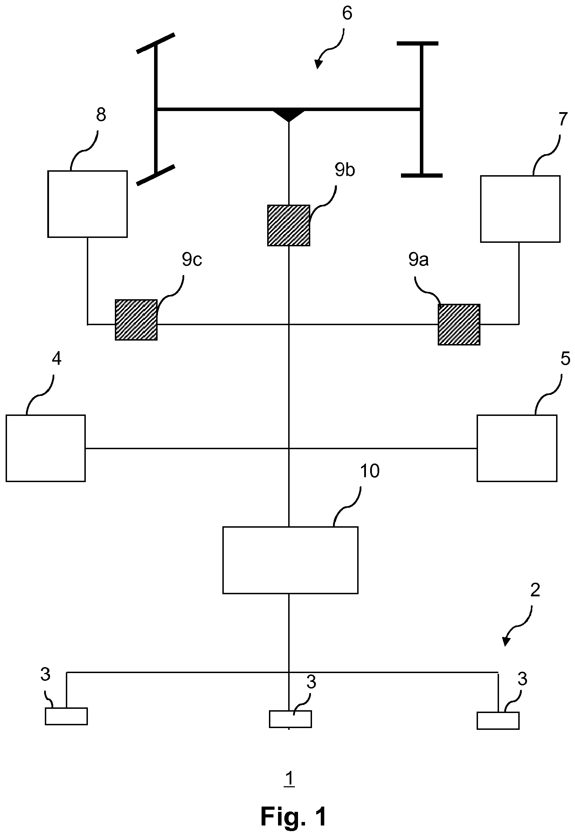

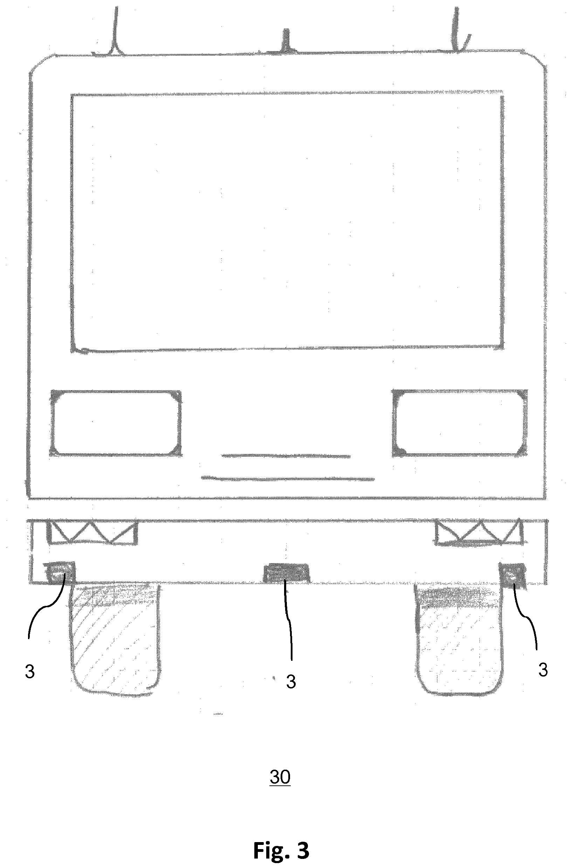

Figur 1 zeigt ein schematisches Blockdiagramm einer Vorrichtung 1 gemäß einer Ausführungsform der Erfindung. Die Vorrichtung 1 zur Reduzierung von Unfallfolgen bei Fahrzeugen umfasst eine Unfall-Sensoreinrichtung 2, die mehrere, im Frontbereich des Fahrzeugs angeordnete Crash-Sensoren 3 umfasst. Dies ist auch in der Frontansicht der Figur 3, die als Fahrzeug beispielhaft einen Lastkraftwagen (LKW) 30 zeigt, illustriert.

Die Crash-Sensoren 3 sind als sogenannte Beschleunigungssensoren aufgebaut Sie erfassen im Falle eines Unfalls bzw. Aufpralls im Frontbereich des Fahrzeugs die Beschleunigung bzw. Verzögerung, die beim Aufprall auftritt.

Figur 1 zeigt außerdem, dass die Vorrichtung 1 ferner eine Steuereinrichtung 10 umfasst, die ausgebildet ist, die von den als Beschleunigungssensoren aufgebauten Crash-Sensoren 3 der Unfall-Sensoreinrichtung 2 erzeugten Signale auszuwerten und zu bestimmen, ob eine Crash- und/oder Unfallsituation vorliegt. Hierzu überwacht die Steuereinrichtung 10 fortlaufend die Signale der Crash-Sensoren 3 der Unfall-Sensoreinrichtung. Wenn beispielsweise die Steuereinrichtung 10 anhand der Signale der Crash-Sensoren 3 feststellt, dass eine Beschleunigung bzw. Verzögerung, die beim Aufprall auftritt, einen vorbestimmten Schwellenwert überschreitet, schließt die Steuereinrichtung 10 auf eine Unfall- oder Crashsituation. Die Steuereinrichtung 10 ist ausgebildet, bei Vorliegen einer Crash- und/oder Unfallsituation einen Notbremsvorgang des Fahrzeugs bis zum Stillstand einzuleiten. Dies kann analog zu einem aus dem Stand der Technik bekannten Notbremssystem erfolgen, wobei ein automatischer Bremseingriff bis zum Stillstand des Fahrzeugs durchgeführt wird.

In Figur 1 sind jeweils stark schematisiert mit dem Bezugszeichen 4 eine Warnblinkanlage, mit dem Bezugszeichen 3 eine Zündung, mit dem Bezugszeichen 6 ein Antriebsstrang des Fahrzeugs, mit dem Bezugszeichen 7 eine Kraftstoffversorgung und mit dem Bezugszeichen 8 eine elektrische Stromversorgung des Fahrzeugs bezeichnet, die jeweils in üblicher, an sich bekannter Weise ausgeführt sein können.

Die dünnen schwarzen Linien der Figur 1 bezeichnen elektrische Signalleitungen, die auch einen CAN-Bus umfassen können. Die Steuereinrichtung 10 kann hierüber z. B. die Warnblinkanlage 4 und die Zündung 5 ansteuern.

Die Vorrichtung 1 umfasst ferner eine manuell betätigbare Freigabeeinrichtung 9a, 9b oder 9c. In Figur 1 sind drei unterschiedliche Ausführungsvarianten 9a, 9b und 9c der Freigabeeinrichtung zusammen dargestellt. Gemäß einem Ausführungsbeispiel ist jedoch nur eine dieser Freigabeeinrichtungen 9a, 9b, 9c vorgesehen. Die Freigabeeinrichtung kann alternativ jedoch auch so ausgeführt sein, dass sie zwei oder alle drei der in Figur 1 darstellten separaten Freigabemodule 9a, 9b, 9c umfasst. Die Freigabeeinrichtung 9a, 9b oder 9c ist jeweils an einer Stelle des Fahrzeugs angeordnet, die vom Fahrersitzplatz aus, ohne auszusteigen, nicht erreichbar ist. Ist das Fahrzeug ein LKW 30, dann ist die Freigabeeinrichtung außerhalb des Fahrerhauses angeordnet.

Beispielsweise kann die Freigabeeinrichtung 9a als sowohl von der Steuereinrichtung 10 elektronisch ansteuerbarer als auch handbetätigbarer Schalter ausgeführt sein, mittels dessen die elektrische Ansteuerung der Kraftstoffversorgung, z. B. durch Ansteuerung der Injektoren oder der Kraftstoffpumpe, deaktivierbar und wieder aktivierbar ist. Gemäß dieser Variante ist die Steuereinrichtung 10 ausgebildet, bei Vorliegen einer Crash- und/oder Unfallsituation die Kraftstoffversorgung zu unterbrechen, indem der Schalter 9a geöffnet wird und dadurch eine elektrische Ansteuerung der Kraftstoffversorgung, z. B. der Injektoren oder der Kraftstoffpumpe, unterbrochen wird. Eine nachfolgende manuelle Betätigung der Freigabeeinrichtung 9a, z. B. des Schalters, versetzt diesen wieder in den vorherigen Zustand, in dem die elektrische Ansteuerung der Kraftstoffversorgung nicht mehr unterbrochen ist. Alternativ kann die Freigabeeinrichtung 9a als elektronisch und manuell betätigbares Steuerventil ausgeführt sein, mit dem die Kraftstoffzufuhr unterbrochen werden kann.

Beispielsweise kann die Freigabeeinrichtung 9b als sowohl von der Steuereinrichtung 10 elektronisch ansteuerbarer als auch handbetätigbarer Schalter ausgeführt sein, mittels dessen die elektrische Energieversorgung des Fahrzeugs unterbrochen werden kann. Gemäß dieser Variante ist die Steuereinrichtung 10 ausgebildet, bei Vorliegen einer Crash- und/oder Unfallsituation die elektrische Energieversorgung des Fahrzeugs zu unterbrechen, indem der Schalter 9b geöffnet wird, der beispielsweise im geöffneten Zustand die Spannungsversorgung einer Fahrzeugbatterie unterbricht. Eine nachfolgende manuelle Betätigung des Schalters 9b schließt diesen wieder, so dass die elektrische Energieversorgung nicht mehr unterbrochen ist.

Beispielsweise kann die Freigabeeinrichtung 9c als sowohl von der Steuereinrichtung 10 elektronisch ansteuerbarer als auch handbetätigbarer Schalter ausgeführt sein, der bei Betätigung ein Signal erzeugt, dass an die Steuereinrichtung 10 übermittelt wird. Gemäß dieser Variante ist die Steuereinrichtung 10 ausgebildet, bei Vorliegen einer Crash- und/oder Unfallsituation nach einer Notbremsung und einem erzwungenen Stillstand des Fahrzeugs die Antriebsräder des Fahrzeugs zu blockieren, indem die Steuereinrichtung 10 eine elektronische Bremsvorrichtung ansteuert, um die Antriebsräder zu blockieren, so lange, bis die Steuereinrichtung 10 feststellt, dass der Schalter 9c manuell betätigt wurde. Ist dies der Fall, wird die Blockierung der Antriebsräder aufgehoben.

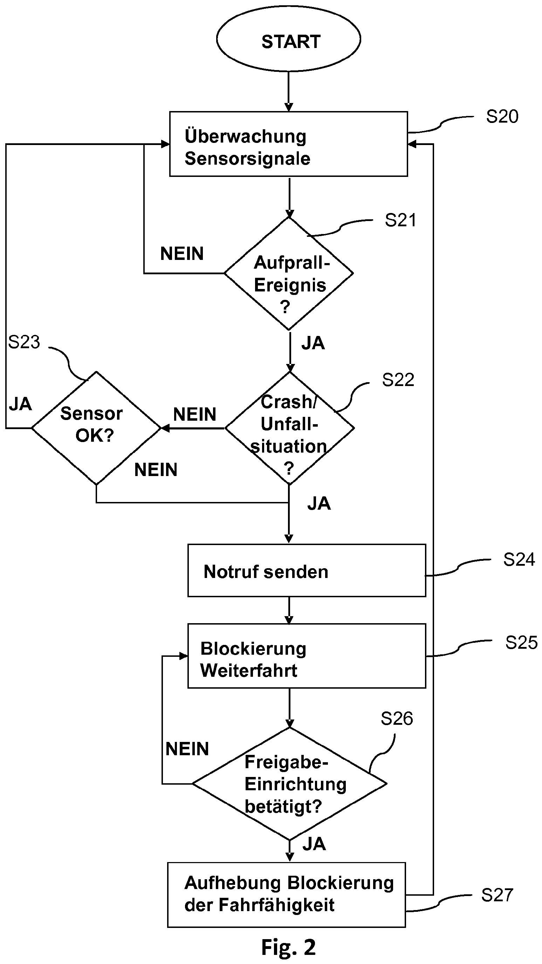

Figur 2 zeigt ein Ablaufdiagramm zur Illustration der Funktionsweise der Vorrichtung gemäß einer Ausführungsform der Erfindung. Das Ablaufdiagramm beschreibt ferner ein Verfahren zur Reduzierung von Unfallfolgen bei Fahrzeugen.

Gemäß Schritt S20 wird nach einem Fahrzeugstart die Unfall-Sensoreinrichtung 2 aktiviert. Die Steuereinrichtung 10 wertet fortlaufend die Signale der Unfall-Sensorvorrichtung 2 aus. Wird anhand der Sensorsignale ein Aufprallereignis im Frontbereich des Fahrzeugs erkannt (Schritt S21), dann wird anschließend ermittelt, ob eine Crash- bzw. Unfallsituation vorliegt (Schritt S22). Hierzu wertet die Steuereinrichtung 10 die von der Unfall-Sensoreinrichtung erzeugten Signale mit Hilfe eines zugeordneten Crash-Algorithmus aus, um zu bestimmen, ob ein vorbestimmter Crash-Schwellenwert oder Aufprallkriterium, der oder das ein Maß für die Intensität eines Crashs oder Unfalls angibt, überschritten ist. Falls nein, handelt es sich vermutlich um ein leichtes Aufprallereignis, z. B. Anstoßen beim Parken oder Rangieren. In diesem Fall wird noch überprüft, ob die Unfall-Sensoreinrichtung 2 weiterhin ordnungsgemäß arbeitet und nicht beschädigt wurde. Ist dies der Fall, wird die Überwachung der Sensorsignale in Schritt S21 fortgesetzt. Andernfalls wird die Blockierung der Weiterfahrt in Schritt S24 blockiert.

Falls die Prüfung in Schritt S22 jedoch ergibt, dass ein vorbestimmter Crash-Schwellenwert oder Aufprallkriterium überschritten wurde, wird gefolgert, dass eine Crash- und/oder Unfallsituation vorliegt. In diesem Fall wird zunächst automatisch ein Notruf an eine Notrufzentrale abgesetzt, insbesondere unter Angabe der Fahrzeugkoordinaten (Schritt S24). Anschließend wird in Schritt S25 die Weiterfahrt blockiert.

Hierzu wird zunächst, falls das Fahrzeug durch das Aufprallereignis noch nicht zum Stillstand gekommen ist, eine Notbremsung mit einem Notbremssystem eingeleitet. Anschließend wird mindestens eine Funktion, die für die Weiterfahrt des Kraftfahrzeugs erforderlich ist, blockiert, wie bereits vorstehend beschrieben wurde. Beispielsweise können die Antriebsräder blockiert werden, indem eine elektronische Bremsvorrichtung des Fahrzeugs entsprechend von der Steuereinrichtung 10 angesteuert wird.

In diesem Zustand kann das Fahrzeug somit nicht mehr weiterfahren, selbst wenn der Fahrer versucht, Gas zu geben etc.

Anschließend wird geprüft, ob die Freigabeeinrichtung betätigt wurde. Hierzu muss der Fahrer aussteigen. Solange die Freigabeeinrichtung nicht manuell betätigt wurde, wird die Weiterfahrt des Fahrzeugs blockiert. Gemäß einer Variante der Ausführungsform ist es zur Betätigung der Freigabeeinrichtung erforderlich, den eingesteckten Zündschlüssel aus dem Zündschloss abzuziehen und in eine für den Zündschlüssel vorgesehene Aufnahme der Freigabeeinrichtung einzustecken. Gemäß einer weiteren Variante kann vorgesehen sein, dass die Freigabeeinrichtung nur mit dem Hauptzündschlüssel betätigt werden kann. Erst nach Betätigung der Freigabeeinrichtung wird in Schritt S27 die Blockierung der Fahrfähigkeit des Fahrzeugs wieder aufgehoben, z. B. indem die Steuereinrichtung 10 die Bremsvorrichtung so ansteuert, dass die Blockierung der Antriebsräder aufgehoben wird.

Anschließend könnte der Fahrer die Fahrt fortsetzen. Das Verfahren bzw. der Verzögerungsmechanismus wird erneut durchlaufen. So werden mit Aufnahme der Weiterfahrt die Sensorsignale wieder gemäß Schritt S20 überwacht und die nachfolgenden Schritte durchlaufen. Wenn der Fahrer erneut einen Unfall bzw. Crash verursacht, wird die Weiterfahrt erneut blockiert und kann nur durch die Betätigung der Freigabeeinrichtung wiederaufgenommen werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Vorrichtung zur Reduzierung von Unfallfolgen bei Fahrzeugen
- 2: Unfall-Sensoreinrichtung
- 3: Crash-Sensor
- 4: Warnblinkanlage
- 5: Zündung
- 6: Antriebsstrang
- 7: Kraftstoffversorgung
- 8: Stromversorgung
- 10: Steuereinrichtung
- 30: LKW

## Patentansprüche

1. Vorrichtung (1) zur Reduzierung von Unfallfolgen bei Fahrzeugen, umfassend
eine Unfall-Sensoreinrichtung (2); und
eine Steuereinrichtung (10), die ausgebildet ist, von der Unfall-Sensoreinrichtung (2) erzeugte Signale auszuwerten und zu bestimmen, ob eine Crash- und/oder Unfallsituation vorliegt, und bei Vorliegen einer Crash- und/oder Unfallsituation einen Notbremsvorgang des Fahrzeugs bis zum Stillstand einzuleiten und mindestens
eine Funktion, die für die Weiterfahrt des Kraftfahrzeugs erforderlich ist, zu blockieren und zum Blockieren der mindestens einen Funktion, die für die Weiterfahrt des Kraftfahrzeugs erforderlich ist, die Antriebsräder mittels eines Bremssystems zu blockieren, nach Einleiten des Notbremsvorgangs des Fahrzeugs bis zum Stillstand,
**dadurch gekennzeichnet,**
**dass** die Vorrichtung eine manuell betätigbare Freigabeeinrichtung (9) umfasst, die an einer Stelle des Fahrzeugs angeordnet ist, die vom Fahrersitzplatz aus, ohne auszusteigen, nicht erreichbar ist, und die Vorrichtung ausgeführt ist, die Blockierung der mindestens einen Funktion, die für die Weiterfahrt des Kraftfahrzeugs erforderlich ist, erst nach einer manuellen Betätigung der Freigabeeinrichtung aufzuheben.

2. Vorrichtung (1) nach Anspruch 1, wobei die Steuereinrichtung (10) ausgebildet ist, zum Blockieren der mindestens einen Funktion, die für die Weiterfahrt des Kraftfahrzeugs erforderlich ist, zusätzlich
a) die Kraftstoffzufuhr (7) zu unterbrechen; und/oder
b) die elektrische Energieversorgung (8) des Kraftfahrzeugs zu unterbrechen.

3. Vorrichtung (1) nach einem der vorhergehenden Ansprüche, wobei die Freigabeeinrichtung (9) nur unter Verwendung des Zündschlüssels manuell betätigbar ist.

4. Vorrichtung (1) nach einem der vorhergehenden Ansprüche, wobei
a) die Freigabeeinrichtung (9) von der Steuereinrichtung (10) elektrisch ansteuerbar ist,
b) die Steuereinrichtung (1) ausgebildet ist, zum Blockieren der mindestens einen Funktion, die für die Weiterfahrt des Kraftfahrzeugs erforderlich ist, die Freigabeeinrichtung (9) anzusteuern,
c) die Freigabeeinrichtung (9) ausgebildet ist, nach Ansteuerung durch die Steuereinrichtung die Antriebsräder mittels eines Bremssystems zu blockieren und/oder die Kraftstoffzufuhr und/oder die Energieversorgung des Kraftfahrzeugs zu unterbrechen; und/oder
d) die Freigabeeinrichtung (9) ausgebildet ist, bei manueller Betätigung die Blockierung der Antriebsräder, die Unterbrechung der Kraftstoffversorgung und/oder der Energieversorgung aufzuheben.

5. Vorrichtung (1) nach einem der vorhergehenden Ansprüche, wobei die Unfall-Sensoreinrichtung (2) mehrere, im Frontbereich des Fahrzeugs angeordnete Crash-Sensoren (3) umfasst.

6. Vorrichtung (1) nach einem der vorhergehenden Ansprüche, wobei die Steuereinrichtung (10) ausgebildet ist, bei Vorliegen einer Crash- und/oder Unfallsituation eine Not-Beleuchtung (4), insbesondere den Warnblinker, zu aktivieren und/oder einen automatischen Notruf an eine Notrufzentrale abzusetzen.

7. Vorrichtung (1) nach einem der vorhergehenden Ansprüche, wobei die Steuereinrichtung (10) ausgebildet ist,
a) von der Unfall-Sensoreinrichtung (2) erzeugte Signale mit Hilfe eines zugeordneten Crash-Algorithmus auszuwerten und zu bestimmen, ob ein vorbestimmter Crash-Schwellenwert oder ein vorbestimmtes Aufprallkriterium, der oder das ein Maß für die Intensität eines Crashs oder Unfalls angibt, überschritten ist; und
b) zu bestimmen, dass eine Crash- und/oder Unfallsituation vorliegt, falls der Crash-Schwellenwert oder das Aufprallkriterium überschritten wurde.

8. Kraftfahrzeug, insbesondere Nutzfahrzeug (30), umfassend eine Vorrichtung nach einem der vorhergehenden Ansprüche.

9. Kraftfahrzeug nach Anspruch 8, wobei die Freigabeeinrichtung (9) an einem hinteren und/oder seitlichen Bereich des Kraftfahrzeugs angeordnet ist.

10. Kraftfahrzeug nach Anspruch 8 oder 9, wobei
a) das Kraftfahrzeug ein Personenkraftwagen ist und die Freigabeeinrichtung im Kofferraum des Kraftfahrzeugs angeordnet ist; oder
b) das Kraftfahrzeug ein Lastkraftwagen (3) mit Fahrerhaus ist und die Freigabeeinrichtung außerhalb des Fahrerhauses angeordnet ist; oder
c) das Kraftfahrzeug ein Omnibus ist und die Freigabeeinrichtung im Heckbereich des Omnibusses angeordnet ist.

## Claims

1. A device (1) for reducing the consequences of vehicle accidents, comprising
an accident sensor device (2); and
a control device (10) which is configured to evaluate signals generated by the accident sensor device (2) and to determine whether a crash and/or accident situation is present, and, if a crash and/or accident situation is present, to initiate an emergency braking process of the vehicle until it comes to a standstill and to block at least one function which is necessary for the further travel of the motor vehicle and for blocking the at least one function which is necessary for the further travel of the motor vehicle, to block the drive wheels by means of a braking system after the emergency braking process of the vehicle until it comes to a standstill has been initiated,
**characterized in that**
the device comprises a manually operable release device (9) which is arranged at a point on the vehicle which cannot be reached from the driver's seat without getting out of the vehicle, and that the device is configured to release the blocking of the at least one function which is necessary for the further travel of the motor vehicle only after the release device has been operated manually.

2. The device (1) according to claim 1, wherein the control device (10) is configured, in order to block the at least one function which is necessary for the further travel of the motor vehicle, additionally
a) to interrupt the fuel supply (7); and/or
b) to interrupt the electrical power supply (8) of the motor vehicle.

3. Device (1) according to one of the preceding claims, wherein the release device (9) can only be operated manually using the ignition key.

4. Device (1) according to one of the preceding claims, wherein
a) the release device (9) is electrically actuable by the control device (10),
b) the control device (1) is configured, for blocking the at least one function which is necessary for the further travel of the motor vehicle, to operate the release device (9),
c) the release device (9) is configured, after being operated by the control device, to block the drive wheels by means of a braking system and/or to interrupt the fuel supply and/or the power supply to the motor vehicle; and/or
d) the release device (9) is configured to release the blocking of the drive wheels, the interruption of the fuel supply and/or the energy supply upon manual actuation.

5. Device (1) according to one of the preceding claims, wherein the accident sensor device (2) comprises a plurality of crash sensors (3) arranged in the front region of the vehicle.

6. Device (1) according to one of the preceding claims, wherein the control device (10) is configured to activate emergency lighting (4), in particular the hazard warning lights, and/or to send an automatic emergency call to an emergency call centre in the presence of a crash and/or accident situation.

7. Device (1) according to one of the preceding claims, wherein the control device (10) is configured,
a) evaluate signals generated by the accident sensor device (2) using an associated crash algorithm and determine whether a predetermined crash threshold or crash criterion indicating a measure of the intensity of a crash or accident has been exceeded; and
(b) determine that a crash and/or accident situation exists if the crash threshold or impact criterion has been exceeded.

8. Motor vehicle, preferably a utility vehicle (30), comprising a device according to any of the preceding claims.

9. Motor vehicle according to claim 8, wherein the release device (9) is arranged at a rear and/or side portion of the motor vehicle.

10. Motor vehicle according to claim 8 or 9, wherein
a) the motor vehicle is a passenger car and the release device is arranged in the luggager compartment of the motor vehicle; or
b) the motor vehicle is a lorry (3) with a driver's cab and the release device is arranged outside the driver's cab; or
c) the motor vehicle is a bus and the release device is arranged in the rear of the bus.

## Revendications

1. Dispositif (1) destiné à réduire les conséquences des accidents de véhicules, comprenant
un dispositif de détection d'accident (2) ; et
un dispositif de commande (10) qui est conçu pour évaluer des signaux générés par le dispositif de détection d'accident (2) et pour déterminer si l'on est en présence d'une situation de collision et/ou d'accident, et, en présence d'une situation de collision et/ou d'accident, pour déclencher un processus de freinage d'urgence du véhicule jusqu'à l'arrêt et pour activer au moins une fonction, qui est nécessaire pour la poursuite du déplacement du véhicule automobile, et pour bloquer ladite au moins une fonction qui est nécessaire pour la poursuite du déplacement du véhicule automobile, pour bloquer les roues motrices au moyen d'un système de freinage, après avoir déclenché le processus de freinage d'urgence du véhicule jusqu'à l'arrêt,
**caractérisé**
**en ce que** le dispositif comprend un dispositif de déblocage (9) à actionnement manuel, qui est disposé à un endroit du véhicule qui n'est pas accessible depuis la place du conducteur sans descendre du véhicule, et le dispositif est conçu pour ne supprimer le blocage d'au moins une fonction qui est nécessaire pour la poursuite du déplacement du véhicule automobile qu'après un actionnement manuel du dispositif de déblocage.

2. Dispositif (1) selon la revendication 1, dans lequel le dispositif de commande (10) est conçu pour bloquer ladite au moins une fonction qui est nécessaire pour la poursuite du déplacement du véhicule automobile, et en outre
a) pour interrompre l'alimentation en carburant (7) ; et/ou
b) pour interrompre l'alimentation en énergie électrique (8) du véhicule automobile.

3. Dispositif (1) selon l'une des revendications précédentes, dans lequel le dispositif de déblocage (9) n'est apte à être actionné manuellement qu'en utilisant la clé de contact.

4. Dispositif (1) selon l'une des revendications précédentes, dans lequel
a) le dispositif de déblocage (9) est apte à être commandé électriquement par le dispositif de commande (10) ,
b) le dispositif de commande (1) est conçu pour commander le dispositif de déblocage (9) afin de bloquer ladite au moins une fonction nécessaire à la poursuite du déplacement du véhicule automobile,
c) le dispositif de déblocage (9) est conçu, après avoir été commandé par le dispositif de commande, pour bloquer les roues motrices au moyen d'un système de freinage et/ou pour interrompre l'alimentation en carburant et/ou l'alimentation en énergie du véhicule automobile ; et/ou
d) le dispositif de déblocage (9) est conçu pour supprimer le blocage des roues motrices, l'interruption de l'alimentation en carburant et/ou de l'alimentation en énergie lorsqu'il est actionné manuellement.

5. Dispositif (1) selon l'une des revendications précédentes, dans lequel le dispositif de détection d'accident (2) comprend une pluralité de capteurs de collision (3) disposés dans la zone avant du véhicule.

6. Dispositif (1) selon l'une des revendications précédentes, le dispositif de commande (10) étant conçu pour activer un éclairage de secours (4), en particulier les feux de détresse, et/ou pour émettre un appel d'urgence automatique vers une centrale d'appel d'urgence en présence d'une situation de collision et/ou d'accident.

7. Dispositif (1) selon l'une des revendications précédentes, dans lequel le dispositif de commande (10) est conçu,
a) pour évaluer des signaux générés par le dispositif de détection d'accident (2) à l'aide d'un algorithme de collision associé et pour déterminer si un seuil de collision prédéterminé ou un critère de collision prédéterminé, qui indique une mesure de l'intensité d'une collision ou d'un accident, est dépassé ; et
b) pour déterminer qu'il existe une situation de collision et/ou d'accident si le seuil de collision ou le critère d'impact a été dépassé.

8. Véhicule automobile, notamment véhicule utilitaire (30), comprenant un dispositif selon l'une quelconque des revendications précédentes.

9. Véhicule automobile selon la revendication 8, dans lequel le dispositif de déblocage (9) est disposé sur une zone arrière et/ou latérale du véhicule automobile.

10. Véhicule automobile selon la revendication 8 ou la revendication 9, dans lequel
a) le véhicule automobile est une voiture de particulier et le dispositif de déverrouillage est placé dans le coffre du véhicule automobile ; ou
b) le véhicule automobile est un camion (3) avec cabine de conduite et le dispositif de déblocage est placé à l'extérieur de la cabine de conduite ; ou
c) le véhicule automobile est un autobus et le dispositif de déblocage est placé dans la zone arrière de l'autobus.
